# FASCICULE DE BREVET EUROPEEN

(11) **EP 2 373 906 B1**
(45) Date de publication et mention de la délivrance du brevet: **29.05.2013**
(21) Numéro de dépôt: 09801517.5
(22) Date de dépôt: 09.12.2009
(51) Int. Cl.: F16F 15/123, F16F 15/134, F16D 3/77, F16F 15/131

(54) **VOLANT FLEXIBLE, EN PARTICULIER DE VEHICULE AUTOMOBILE**
FLEXIBLES SCHWUNGRAD, INSBESONDERE FÜR EIN KRAFTFAHRZEUG
FLEXIBLE FLYWHEEL, PARTICULARLY FOR A MOTOR VEHICLE

(30) Priorité: 08.01.2009 FR 0950077
(43) Date de publication de la demande: 12.10.2011
(73) Titulaire: Valeo Embrayages, 80009 Amiens (FR)
(72) Inventeur: FAFET, Olivier, F-80000 Amiens (FR); FENIOUX, Daniel, F-80480 Saleux (FR); GRATON, Michel, F-75020 Paris (FR); RENIER, Lionel, F-80670 Canaples (FR)
(74) Mandataire: Jeuland, Mickaël
(86) Numéro de dépôt international: PCT/FR2009/052464
(87) Numéro de publication internationale: WO 2010/079274

(56) Documents cités:
- EP-A1- 0 717 211
- EP-A1- 0 984 184
- WO-A1-03/008839

## Description

La présente invention concerne un volant flexible, tel par exemple qu'un volant primaire flexible pour un double volant amortisseur, en particulier dans un système de transmission de couple pour véhicule automobile.

Un double volant amortisseur comprend deux volants d'inertie coaxiaux, à savoir un volant primaire monté fixement en bout du vilebrequin et un volant secondaire formant un plateau de réaction de l'embrayage. Le volant secondaire est centré et guidé en rotation sur le volant primaire au moyen d'un palier.

Un amortisseur de torsion à ressorts et à moyens de frottement est monté entre les deux volants pour transmettre un couple de rotation d'un volant à l'autre tout en absorbant et en amortissant les vibrations et les à-coups.

Les extrémités des ressorts viennent en appui sur des butées solidaires des volants, agencées de sorte que toute rotation ou oscillation d'un volant par rapport à l'autre provoque une compression des ressorts de l'amortisseur dans un sens ou dans l'autre et soit contrariée par cette compression.

La fréquence propre axiale du volant primaire doit être faible, par exemple inférieure à 50 Hz, afin que celui-ci n'entre pas en résonance lors du fonctionnement en bas régime du moteur. Pour cela, il est connu d'utiliser un volant primaire flexible comprenant au moins deux disques flexibles empilés, dont les périphéries internes sont destinées à être fixées sur un arbre moteur et dont les périphéries externes sont destinées à être fixées sur une masse d'inertie, chaque disque flexible comprenant deux parties planes parallèles décalées axialement et raccordées l'une à l'autre par une partie cambrée. Les disques flexibles présentent des profils identiques, et sont superposés et emboîtés les uns dans les autres. Une telle structure est notamment connue du document EP 0 984 184.

Les vibrations axiales du volant flexible engendrent une déformation des disques précités. Les parties cambrées des disques étant emboîtées sans jeu les unes dans les autres, les disques n'ont aucune possibilité de déplacement radial les uns par rapport aux autres, ce qui provoque leur arc-boutement au niveau de leur partie cambrée et, ainsi, la rigidification de l'ensemble. Ceci tend à diminuer l'efficacité du volant flexible.

L'invention a notamment pour but d'apporter une solution simple, efficace et économique à ce problème.

A cet effet, l'invention propose un volant flexible, en particulier de véhicule automobile, comprenant au moins deux disques flexibles empilés, dont les périphéries internes sont destinées à être fixées sur un arbre moteur et dont les périphéries externes sont destinées à être fixées sur une masse d'inertie, chaque disque flexible comprenant au moins deux parties planes parallèles, décalées axialement et raccordées l'une à l'autre par une partie cambrée, les parties cambrées des disques étant sensiblement emboîtées l'une dans l'autre ou les unes dans les autres, caractérisé en ce que, dans au moins une zone adjacente à une partie cambrée, les disques sont écartés l'un de l'autre, de manière à former un espace facilitant la déformation axiale des disques.

De cette manière, l'apparition du phénomène d'arc-boutement ou de rigidification des disques sous l'effet des vibrations axiales est évitée.

Selon une forme de réalisation de l'invention, les parties cambrées des disques sont décalées radialement et axialement d'un disque à l'autre.

Selon une caractéristique de l'invention, la distance axiale entre les parties cambrées des disques est comprise entre 0,5 et 5 mm, au repos, c'est-à-dire lorsque les disques flexibles ne sont pas sollicités par les vibrations axiales et ne sont donc pas déformés.

Avantageusement, la distance radiale entre les parties cambrées des disques est comprise entre 0,5 et 5 mm (au repos).

Dans un mode de réalisation de l'invention, les distances axiales entre les parties planes des disques sont nulles ou sensiblement nulles.

En variante, les parties planes des disques sont écartées axialement dans au moins une zone adjacente à une partie cambrée, par exemple d'une distance inférieure à 1 mm.

Dans un mode de réalisation préféré de l'invention, le volant flexible comprend trois disques flexibles empilés.

De façon générale, les disques flexibles sont en tôle d'acier et ont une épaisseur comprise entre 0,5 et 1,2 mm. Ils peuvent alors être fabriqués par emboutissage.

Avantageusement, chaque partie cambrée comprend deux congés de raccordement annulaires reliant respectivement chacune des parties planes à une partie annulaire courbe, dont la courbure présente un point d'inflexion.

Selon une possibilité de l'invention, le rayon de courbure de chaque congé de raccordement est compris entre 5 et 40 mm.

En variante, chaque partie cambrée comprend deux congés de raccordement annulaires reliant respectivement chacune des parties planes à une partie tronconique.

De manière préférée, chaque disque flexible comprend trois parties planes parallèles successives, décalées axialement les unes par rapport aux autres, les parties planes étant raccordées deux à deux par des parties cambrées.

Chaque disque comporte alors une partie cambrée radialement interne et une partie cambrée radialement externe, opposées l'une à l'autre, de sorte que chaque partie plane radialement externe s'étende dans un plan disposé axialement entre les plans des deux autres parties planes correspondantes.

Le volant flexible selon l'invention peut être un volant d'inertie monté en bout d'un vilebrequin et formant le plateau de réaction d'un embrayage, ou un volant primaire d'un double volant amortisseur.

L'invention propose également un double volant amortisseur, en particulier pour véhicule automobile, caractérisé en ce qu'il comprend un volant primaire formé par un volant flexible du type décrit ci-dessus.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective éclatée d'un double volant amortisseur selon l'invention ;
- la figure 2 est une vue en coupe axiale du double volant amortisseur de la figure 1 ;

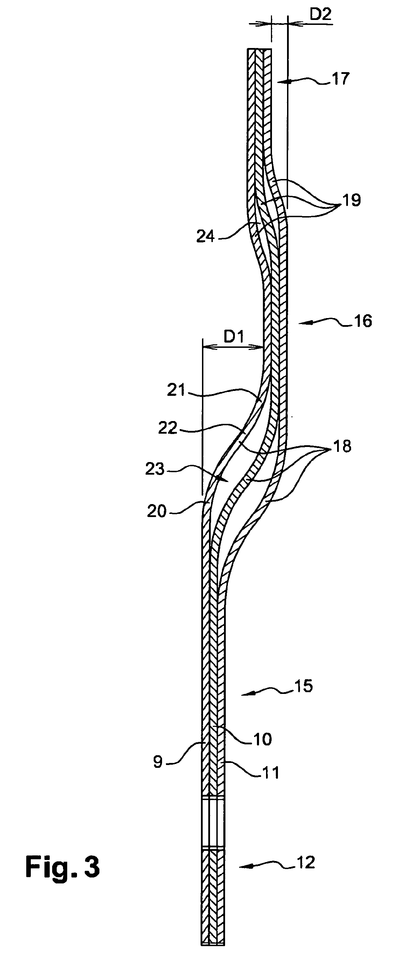

- la figure 3 est une vue de détail des disques ;
- la figure 4 est une vue de détail des parties cambrées des disques ;
- la figure 5 est une vue correspondant à la figure 4, représentant une variante de réalisation de l'invention ;
- la figure 6 est une vue de face, en coupe partielle, du double volant amortisseur de la figure 1.

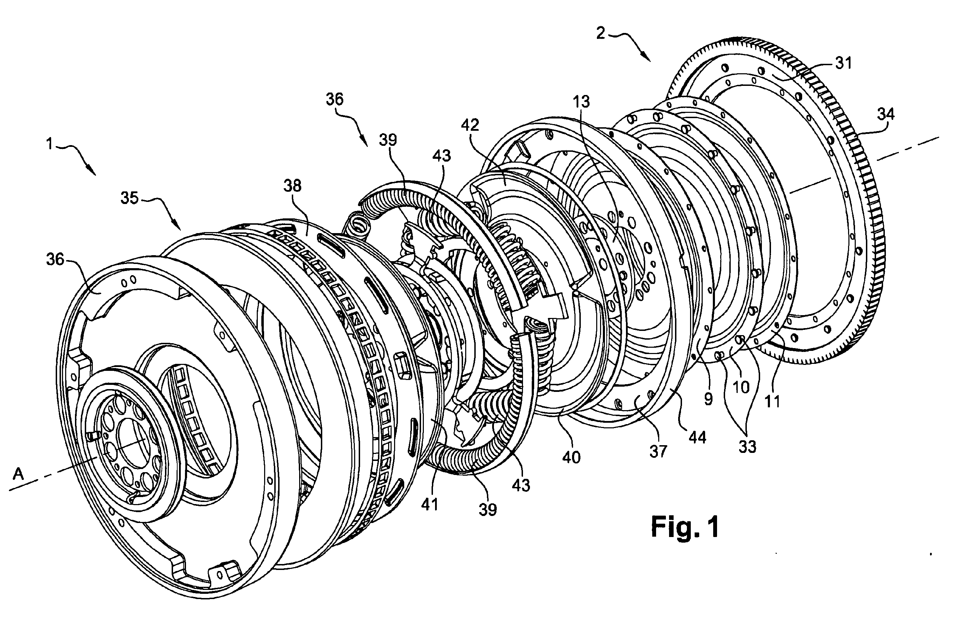

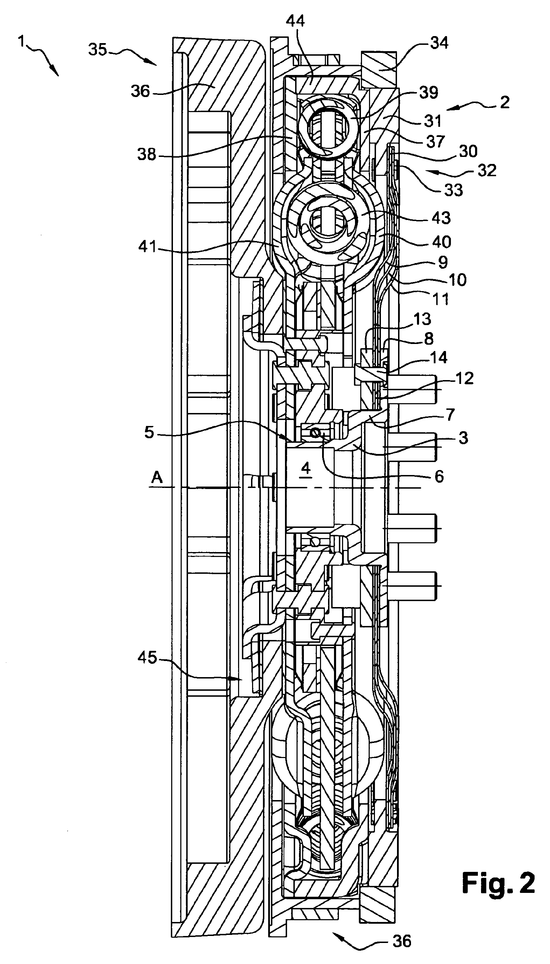

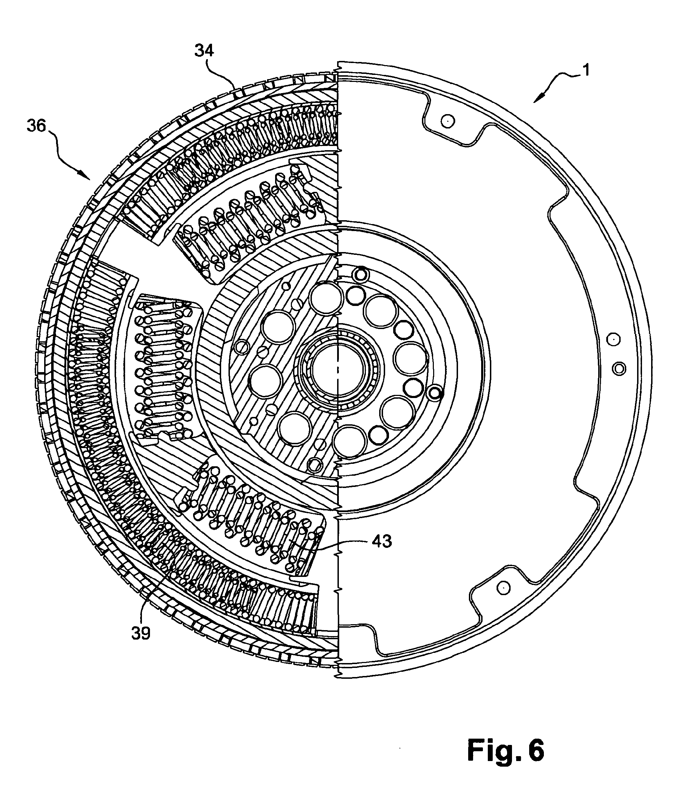

Les figures 1, 2 et 6 représentent un double volant amortisseur 1 selon l'invention, destiné à coupler un moteur, par exemple un moteur de type Diesel, avec une boîte de vitesses d'un véhicule automobile.

Ce double volant amortisseur comporte un volant primaire 2, destiné à être fixé en bout d'un vilebrequin du moteur par des vis ou des boulons.

Le volant primaire 2 comporte un appendice central 3 d'axe A, de forme générale tubulaire, comprenant une première partie 4 présentant une surface externe cylindrique 5 autour de laquelle est monté un pallier 6, prolongée par une seconde partie 7 de plus grand diamètre, formant un épaulement, et dont l'extrémité avant présente un flasque 8 s'étendant radialement vers l'extérieur.

Le volant primaire 2 comporte en outre au moins deux disques en tôle d'acier, de préférence trois disques 9, 10, 11, empilés les uns sur les autres et montés autour de la seconde partie 7 de l'appendice central 3. L'épaisseur moyenne des disques est comprise entre 0,5 et 1,2 mm.

Le bord interne 12 des disques 9 à 11 est serré entre le flasque 8 et une rondelle 13 montée autour de la seconde partie 7, en arrière du flasque 8, l'ensemble étant fixé par des rivets 14.

Chaque disque 9 à 11 est du type cambré et comprend une partie périphérique interne 15, une partie médiane 16, et une partie périphérique externe 17 planes et parallèles, s'étendant transversalement par rapport à l'axe A.

La partie périphérique interne 15 est reliée à la partie médiane 16 par une première partie cambrée 18, la partie périphérique médiane 16 étant reliée à la partie périphérique externe 17 par une seconde partie cambrée 19.

Les premières parties cambrées 18 des disques 9 à 11 sont orientées dans le même sens et sont sensiblement parallèles entre elles, les disques étant emboîtés les uns dans les autres.

Les secondes parties cambrées 19 des disques 9 à 11 sont orientées dans le sens contraire aux première parties cambrées 18, de sorte que chaque partie périphérique externe 17 s'étend dans un plan disposé axialement entre les plans des parties planes interne 15 et médiane 16.

Plus particulièrement, les parties planes médianes 16 sont disposées en avant des parties planes internes 15, et les parties planes externes 17 sont disposées en arrière des parties planes médianes 16.

Cet agencement limite l'encombrement axial du double volant amortisseur 1.

La distance axiale D1 entre la partie médiane 16 d'un disque et sa partie périphérique interne 15 est comprise entre 2 et 10 mm et ces distances D1 sont sensiblement identiques pour les trois disques 9 à 11.

La distance axiale D2 entre la partie périphérique externe 17 d'un disque et sa partie médiane 16 est comprise entre 0,5 et 5 mm et ces distances D2 sont sensiblement identiques pour les trois disques 9 à 11.

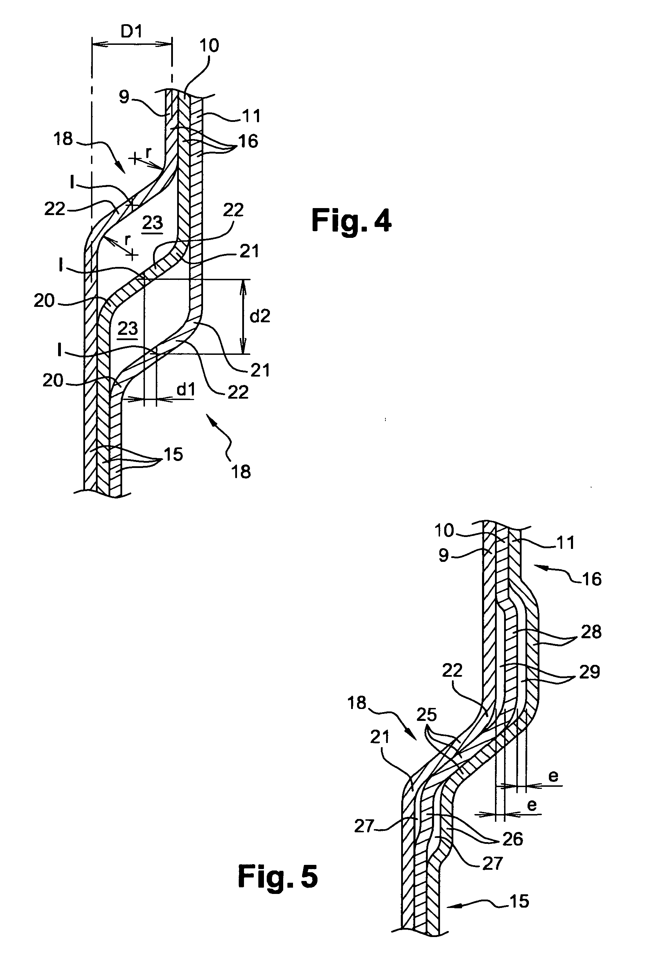

Comme cela est mieux visible à la figure 4, chaque première partie cambrée 18 comprend un congé de raccordement annulaire radialement interne 20 et un congé de raccordement annulaire radialement externe 21, reliant respectivement la partie périphérique interne 15 et la partie médiane 16, à une partie annulaire courbe 22, dont la courbure présente un point d'inflexion I.

Chaque congé 20, 21 présente un rayon de courbure r compris entre 5 et 40 mm, préférentiellement entre 10 et 20 mm.

Bien entendu, la partie annulaire courbe 22 pourrait être remplacée par une partie tronconique.

Les premières parties cambrées 18 de deux disques adjacents sont décalées axialement d'une distance d1 correspondant sensiblement à l'épaisseur d'un disque dans le cas de la figure 4, puisque les parties planes 15, 16 des disques 9 à 11 sont en contact les unes sur les autres. Les premières parties cambrées 18 sont également décalées radialement d'une distance d2 comprise entre 0,5 et 5 mm.

Ainsi, un espace annulaire 23 est formé entre deux disques adjacents, celui-ci étant délimité par une portion de partie plane 15 d'un disque, par exemple le disque médian 10, par la paroi radialement interne, de forme concave, du congé interne 20 du disque 10, par la paroi radialement interne de la zone annulaire courbe 22 du disque 10, par la paroi radialement interne, de forme convexe, du congé externe 21 du disque 10, par une portion de partie plane 16 du disque 11, situé directement en avant du premier 10, par la paroi radialement externe, de forme concave, du congé externe 21 du disque 11, par la paroi radialement externe de la zone annulaire courbe 22 du disque 11, et par la paroi radialement interne, de forme convexe, du congé interne 20 du disque 11.

Les secondes parties cambrées 19 présentent une structure similaire à celle des premières parties cambrées 18 et définissent, de la même manière, un espace annulaire 24 entre deux disques adjacents. On rappelle toutefois que les secondes parties cambrées 19 sont orientées dans le sens opposé aux premières parties cambrées 18.

Selon une variante de réalisation de l'invention représentée à la figure 5, ce sont les parties planes des disques adjacentes aux parties cambrées qui sont décalées axialement les unes par rapport aux autres, au repos, pour éviter l'arc-boutement des disques en fonctionnement. En figure 5, chaque première partie cambrée 18 comporte un congé de raccordement annulaire radialement interne 20 et un congé de raccordement annulaire radialement externe 21, reliant respectivement la partie périphérique interne et la partie médiane, à une partie tronconique 25.

Les disques médian 10 et avant 11 présentent chacun un premier décrochement 26 vers l'avant au niveau des parties internes planes 15, de façon à délimiter des espaces 27 entre les disques 9 et 10 et entre les disques 11 et 12.

Chaque disque 10 et 11 présente en outre un second décrochement 28 vers l'avant au niveau des parties médianes planes 16, de façon à délimiter des espaces 29 entre les disques 9 et 10 et entre les disques 11 et 12.

Les décrochements 26 et 28 sont adjacents aux premières parties cambrées 18.

L'écartement e entre les disques est préférentiellement inférieur à 1 mm. Dans chacune des variantes présentée ci-dessus, les espaces 27, 29 formés entre les disques 9 à 11 sont dimensionnés de façon à permettre la libre déformation des disques 9 à 11 lorsqu'ils sont soumis à des déplacements axiaux, de manière à éviter l'apparition du phénomène d'arc-boutement ou de rigidification des disques apparaissant dans l'art antérieur. Pour cela, il est nécessaire de s'assurer que, pour une déformation maximale des disques 9 à 11, il subsiste un écartement, même faible, entre les disques.

Les parties périphériques externes 30 des disques 9 à 11 sont fixées à une première masse d'inertie 31 en fonte ou en acier, de forme générale annulaire, entourant les disques en tôle 9 à 11.

Plus particulièrement, la première masse d'inertie 31 présente une zone annulaire en creux 32 dans laquelle les bords externes des disques 9 à 11 sont fixés par des rivets 33. La première masse d'inertie 31 porte en outre une couronne dentée 34 de démarreur à sa périphérie externe.

Le double volant amortisseur 1 comporte de plus un volant secondaire 35 comprenant une seconde masse d'inertie 36 servant de plateau de réaction d'un mécanisme d'embrayage.

De manière classique, la face radiale arrière de la masse d'inertie 36 forme une surface d'appui d'un disque de friction (non représenté), lié en rotation avec un arbre d'entrée de la boîte de vitesses et sollicité par un plateau de pression solidaire en rotation du volant secondaire, lorsque l'embrayage est en position embrayée.

Le volant secondaire 35 est centré et guidé en rotation sur l'appendice central 3 du volant primaire 2, par l'intermédiaire du palier 6.

Les volants primaire 2 et secondaire 35 sont couplés par un amortisseur de torsion 36, destiné à absorber et amortir les vibrations et les acyclismes générés par le moteur du véhicule automobile.

L'amortisseur de torsion comporte deux rondelles de guidage 37, 38 solidarisées en rotation avec le volant primaire 2 à l'aide de rivets ou de vis, et délimitant entre elles des logements dans lesquels sont montés des ressorts courbes 39 répartis circonférentiellement autour de l'axe A.

L'amortisseur de torsion 36 comporte également deux rondelles de guidage 40, 41, solidarisées en rotation avec le volant secondaire 35 à l'aide de rivets ou de vis, et délimitant entre elles des logements 42 dans lesquels sont montés des ressorts droits 43 répartis circonférentiellement autour de l'axe A.

La rondelle de guidage 37 comporte, à sa périphérie radialement externe, une collerette 44 s'étendant axialement jusqu'à la rondelle de guidage 38. Cette collerette 44 est susceptible de retenir un lubrifiant visqueux, tel que de la graisse ou de l'huile, autour des ressorts courbes 39, empêchant notamment ce lubrifiant de s'échapper sous l'effet d'une force centrifuge. Par ailleurs, cette collerette 44 est également susceptible de retenir les ressorts courbes 39 lorsqu'ils sont soumis à la force centrifuge, à haut régime du moteur.

Les moyens d'amortissement comportent en outre des moyens de frottement montés entre les deux masses d'inertie 31, 36 et permettant d'amortir les vibrations et acyclismes absorbés par les ressorts 39, 43, en freinant les oscillations relatives des deux masses d'inertie 31, 36.

Enfin, le double volant amortisseur 1 peut également comporter des moyens de limitation de couple 45 intégrés au volant secondaire 35.

## Revendications

1. Volant flexible (2), en particulier de véhicule automobile, comprenant au moins deux disques flexibles empilés (9, 10, 11), dont les périphéries internes (12) sont destinées à être fixées sur un arbre moteur et dont les périphéries externes (30) sont destinées à être fixées sur une masse d'inertie (31), chaque disque flexible (9, 10, 11) comprenant au moins deux parties planes parallèles (15, 16, 17), décalées axialement (D1, D2) et raccordées l'une à l'autre par une partie cambrée (18, 19), les parties cambrées (18, 19) des disques (9, 10, 11) étant sensiblement emboîtées l'une dans l'autre ou les unes dans les autres, **caractérisé en ce que**, dans au moins une zone adjacente à une partie cambrée, les disques (9, 10, 11) sont écartés l'un de l'autre ou les uns des autres, de manière à former un espace (23, 27, 29) facilitant la déformation axiale des disques (9, 10, 11).

2. Volant flexible (2) selon la revendication 1, **caractérisé en ce que** les parties cambrées (18) des disques (9, 10, 11) sont décalées radialement (d2) et axialement (d1) d'un disque à l'autre.

3. Volant flexible (2) selon la revendication 2, **caractérisé en ce que** la distance axiale (d1) entre les parties cambrées (18) des disques (9, 10, 11) est comprise entre 0,5 et 5 mm (au repos).

4. Volant flexible (2) selon l'une des revendications 2 ou 3, **caractérisé en ce que** la distance radiale (d2) entre les parties cambrées (18) des disques (9, 10, 11) est comprise entre 0,5 et 5 mm (au repos).

5. Volant flexible (2) selon l'une des revendications 1 à 4, **caractérisé en ce que** les distances axiales entre les parties planes (15, 16, 17) des disques sont nulles ou sensiblement nulles.

6. Volant flexible selon l'une des revendications 1 à 4, **caractérisé en ce que**, les parties planes (15, 16) des disques (9, 10, 11) sont écartées axialement dans au moins une zone (26, 28) adjacente à une partie cambrée, par exemple d'une distance (e) inférieure à 1 mm.

7. Volant flexible (2) selon l'une des revendications 1 à 6, **caractérisé en ce qu'**il comprend trois disques flexibles empilés (9, 10, 11).

8. Volant flexible (2) selon l'une des revendications 1 à 7, **caractérisé en ce que** les disques flexibles (9, 10, 11) sont en tôle d'acier et ont une épaisseur comprise entre 0,5 et 1,2 mm.

9. Volant flexible (2) selon l'une des revendications 1 à 8, **caractérisé en ce que** chaque partie cambrée (18) comprend deux congés de raccordement annulaires (20, 21) reliant respectivement chacune des parties planes (15, 16) à une partie annulaire courbe ( 22), dont la courbure présente un point d'inflexion (I).

10. Volant flexible (2) selon la revendication 9, **caractérisé en ce que** le rayon de courbure (r) de chaque congé de raccordement (20, 21) est compris entre 5 et 40 mm.

11. Volant flexible (2) selon l'une des revendications 1 à 8, **caractérisé en ce que** chaque partie cambrée (18) comprend deux congés de raccordement annulaires (21, 22) reliant respectivement chacune des parties planes (15, 16) à une partie tronconique (25).

12. Volant flexible (2) selon l'une des revendications 1 à 11, **caractérisé en ce que** chaque disque flexible (9, 10, 11) comprend trois parties planes parallèles (15, 16, 17) successives, décalées axialement (D1, D2) les unes par rapport aux autres, ces parties planes étant raccordées deux à deux par des parties cambrées (18, 19).

13. Double volant amortisseur (1), en particulier pour véhicule automobile, **caractérisé en ce qu'**il comprend un volant primaire formé par un volant flexible (2) selon l'une des revendications 1 à 12.

## Patentansprüche

1. Flexibles Schwungrad (2), insbesondere für Kraftfahrzeuge, umfassend zumindest zwei aufeinander geschichtete flexible Scheiben (9, 10, 11), deren innere Umfänge (12) dazu bestimmt sind, an einer Antriebswelle befestigt zu werden und deren äußere Umfänge (30) dazu bestimmt sind, an einer Schwungmasse (31) befestigt zu werden, wobei jede flexible Scheibe (9, 10, 11) zumindest zwei ebene parallele Teile (15, 16, 17) umfasst, die axial (D1, D2) versetzt und durch einen gebogenen Teil (18, 19) aneinander angeschlossen sind, wobei die gebogenen Teile (18, 19) der Scheiben (9, 10, 11) in etwa einer in den anderen oder einige in andere ineinander gefügt sind, **dadurch gekennzeichnet, dass** in zumindest einem an einen gebogenen Teil angrenzenden Bereich die Scheiben (9, 10, 11) eine von der anderen oder einige von anderen entfernt sind, um einen Raum (23, 27, 29) zu bilden, welcher die axiale Verformung der Scheiben (9, 10, 11) erleichtert.

2. Flexibles Schwungrad (2) nach Anspruch 1, **dadurch gekennzeichnet, dass** die gebogenen Teile (18) der Scheiben (9, 10, 11) radial (d2) und axial (d1) von einer Scheibe zur anderen versetzt sind.

3. Flexibles Schwungrad (2) nach Anspruch 2, **dadurch gekennzeichnet, dass** der axiale Abstand (d1) zwischen den gebogenen Teilen (18) der Scheiben (9, 10, 11) zwischen 0,5 und 5 mm (im Ruhezustand) beträgt.

4. Flexibles Schwungrad (2) nach Anspruch 2 oder 3, **dadurch gekennzeichnet, dass** der radiale Abstand (d2) zwischen den gebogenen Teilen (18) der Scheiben (9, 10, 11) zwischen 0,5 und 5 mm (im Ruhezustand) beträgt.

5. Flexibles Schwungrad (2) nach einem der Ansprüche 1 bis 4, **dadurch gekennzeichnet, dass** die axialen Abstände zwischen den ebenen Teilen (15, 16, 17) der Scheiben null oder in etwa null betragen.

6. Flexibles Schwungrad nach einem der Ansprüche 1 bis 4, **dadurch gekennzeichnet, dass** die ebenen Teile (15, 16) der Scheiben (9, 10, 11) in zumindest einem an einen gebogenen Teil angrenzenden Bereich (26, 28) axial entfernt sind, zum Beispiel um einen Abstand (e) kleiner als 1 mm.

7. Flexibles Schwungrad (2) nach einem der Ansprüche 1 bis 6, **dadurch gekennzeichnet, dass** es drei aufgeschichtete flexible Scheiben (9, 10, 11) umfasst.

8. Flexibles Schwungrad (2) nach einem der Ansprüche 1 bis 7, **dadurch gekennzeichnet, dass** die flexiblen Scheiben (9, 10, 11) aus Stahlblech bestehen und eine Dicke zwischen 0,5 und 1,2 mm haben.

9. Flexibles Schwungrad (2) nach einem der Ansprüche 1 bis 8, **dadurch gekennzeichnet, dass** jeder gebogene Teil (18) zwei ringförmige Anschluss-Rundungen (20, 21) umfasst, die jeden der ebenen Teile (15, 16) jeweils mit einem ringförmigen Kurventeil (22) verbinden, dessen **Krümmung** einen Wendepunkt (I) **aufweist.**

10. Flexibles Schwungrad (2) nach Anspruch 9, **dadurch gekennzeichnet, dass** der Biegeradius (r) von jeder Anschluss-Rundung (20, 21) zwischen 5 und 40 mm liegt.

11. Flexibles Schwungrad (2) nach einem der Ansprüche 1 bis 8, **dadurch gekennzeichnet, dass** jeder gebogene Teil (18) zwei ringförmige Anschluss-Rundungen (21, 22) umfasst, die jeden der ebenen Teile (15, 16) jeweils mit einem konischen Teil (25) verbinden.

12. Flexibles Schwungrad (2) nach einem der Ansprüche 1 bis 11, **dadurch gekennzeichnet, dass** jede flexible Scheibe (9, 10, 11) drei hintereinander folgende ebene parallele Teile (15, 16, 17) umfasst, die einer im Verhältnis zu den anderen axial (D1, D2) versetzt sind, wobei die ebenen Teile paarweise durch gebogene Teile (18, 19) aneinander angeschlossen sind.

13. Zweimassen-Dämpfungs-Schwungrad (1), insbesondere für Kraftfahrzeuge, **dadurch gekennzeichnet, dass** es ein Primär-Schwungrad umfasst, welches durch ein flexibles Schwungrad (2) nach einem der Ansprüche 1 bis 12 gebildet ist.

## Claims

1. Flexible flywheel (2), in particular for a motor vehicle, comprising at least two stacked flexible discs (9, 10, 11), the inner peripheries (12) of which are designed to be secured to a drive shaft and the outer peripheries (30) of which are designed to be secured to an inertia mass (31), each flexible disc (9, 10, 11) comprising at least two parallel flat parts (15, 16, 17) which are offset axially (D1, D2) and connected to one another by a curved part (18, 19), the curved parts (18, 19) of the discs (9, 10, 11) being substantially nested one inside the other, **characterized in that**, in at least one region adjacent to a curved part, the discs (9, 10, 11) are spaced one from the other so as to form a space (23, 27, 29) which facilitates the axial deformation of the discs (9, 10, 11).

2. Flexible flywheel (2) according to claim 1, **characterized in that** the curved parts (18) of the discs (9, 10, 11) are offset radially (d2) and axially (d1) from one disc to the other.

3. Flexible flywheel (2) according to claim 2, **characterized in that** the axial distance (d1) between the curved parts (18) of the discs (9, 10, 11) is between 0.5 and 5 mm (at rest).

4. Flexible flywheel (2) according to either of claims 2 or 3, **characterized in that** the radial distance (d2) between the curved parts (18) of the discs (9, 10, 11) is between 0.5 and 5 mm (at rest).

5. Flexible flywheel (2) according to any one of claims 1 to 4, **characterized in that** the axial distances between the flat parts (15, 16, 17) of the discs are zero or substantially zero.

6. Flexible flywheel according to any one of claims 1 to 4, **characterized in that**, the flat parts (15, 16) of the discs (9, 10, 11) are spaced axially in at least one region (26, 28) which is adjacent to a curved part, for example by a distance (e) of less than 1 mm.

7. Flexible flywheel (2) according to any one of claims 1 to 6, **characterized in that** it comprises three stacked flexible discs (9, 10, 11).

8. Flexible flywheel (2) according to any one of claims 1 to 7, **characterized in that** the flexible discs (9, 10, 11) are made of steel plate and have a thickness of between 0.5 and 1.2 mm.

9. Flexible flywheel (2) according to any one of claims 1 to 8, **characterized in that** each curved part (18) comprises two annular connection shoulders (20, 21) which respectively connect each of the flat parts (15, 16) to a curved annular part (22), the curvature of which has a point of inflection (1).

10. Flexible flywheel (2) according to claim 9, **characterized in that** the radius of curvature (r) of each connection shoulder (20, 21) is between 5 and 40 mm.

11. Flexible flywheel (2) according to any one of claims 1 to 8, **characterized in that** each curved part (18) comprises two annular connection shoulders (21, 22) which connect each of the flat parts (15, 16) respectively to a frusto-conical part (25).

12. Flexible flywheel (2) according to any one of claims 1 to 11, **characterized in that** each flexible disc (9, 10, 11) comprises three successive parallel flat parts (15, 16, 17) which are offset axially (D1, D2) relative to one another, these flat parts being connected in pairs by curved parts (18, 19).

13. Double damping flywheel (1), in particular for a motor vehicle, **characterized in that** it comprises a primary flywheel formed by a flexible flywheel (2) according to any one of claims 1 to 12.
